# EUROPEAN PATENT APPLICATION

(11) **EP 4 317 079 A1**
(43) Date of publication of application: **07.02.2024**
(21) Application number: 22780207.1
(22) Date of filing: 17.03.2022
(51) Int. Cl.: C01G 53/00, H01M 4/1391, H01M 4/525

(54) **METHOD FOR MANUFACTURING POSITIVE ELECTRODE ACTIVE MATERIAL FOR LITHIUM-ION SECONDARY BATTERY**

(30) Priority: 30.03.2021 JP 2021056510
(71) Applicant: Proterial, Ltd., Tokyo 135-0061 (JP)
(72) Inventor: NAKABAYASHI, Takashi, Tokyo 108-8224 (JP); TOKORO, Hisato, Tokyo 108-8224 (JP); TAKANO, Shuichi, Tokyo 108-8224 (JP)
(74) Representative: Becker, Eberhard
(86) International application number: PCT/JP2022/012429
(87) International publication number: WO 2022/209988

(57) **Abstract**

Because nickel sulphate is a hexahydrate, the mass% of Ni is about 20-25%, which makes the bulk specific density thereof low, and thus, there is a problem in that the volume to be handled in transport and in a step for manufacturing a positive electrode material increases. The present invention provides a method for manufacturing a positive electrode active material for a lithium-ion secondary battery, the method including: a step for firing mixed powder in which metal nickel powder, a compound containing Li, and a compound containing a metal element M other than Li and Ni are mixed to yield a positive electrode active material for a lithium-ion secondary battery, the positive electrode material having a layered structure, wherein the amount of Ni in the total amount of metal elements contained in the positive electrode active material for a lithium-ion secondary battery is equal to or greater than 60% in terms of the atomic ratio, and the nickel powder is at least partially oxidized or a step for oxidizing said powder is included.

## Description

### [Technical Field]

The present invention relates to a method for manufacturing a positive electrode active material for a lithium-ion secondary battery.

### [Background Art]

Lithium-ion batteries are being widely used in a variety of fields such as electronics, automobiles and infrastructure. Among these, regarding automobiles, lithium-ion batteries are used as power sources of electric vehicles (EVs) and have become an important core component. From the viewpoint of extending the cruising range, the energy density of lithium-ion batteries is improving every year, and a high-capacity ternary layered material is used as a positive electrode active material used in batteries. The ternary layered material is a complex oxide of a metal element such as Ni, Co, Mn or Al and Li (hereinafter, lithium metal complex oxide), and, as the atomic ratio of Ni to the metal element becomes higher, the capacity becomes higher. Therefore, a high-Ni material is expected as a positive electrode active material for EV-oriented batteries. Furthermore, from the viewpoint of the persistent maintenance of the global environment and countermeasures for cost or resources saving, materials for which the use of Co, which has a small reserve and is expensive, is reduced are being expected, and, as a substitute therefor, an increase in Ni is promoted more and more in the future due to the movement for improving the Ni ratio.

Patent Literature 1 describes a method for manufacturing a positive electrode active material using a hydroxide of a metal as a precursor. A process for manufacturing a positive electrode active material by reacting a Li source with a metal hydroxide is being widely adopted.

In addition, Patent Literature 2 describes a manufacturing method in which a nickel source is melted, nickel particles obtained by an atomization method are dissolved in a sulfuric acid aqueous solution to obtain nickel sulphate, then, a hydroxide containing Ni is obtained by a crystallization method, and a positive electrode active material for a secondary battery is obtained by a coprecipitation method using this hydroxide.

### [Citation List]

### [Patent Literature]

[Patent Literature 1]
   Japanese Patent Laid-Open No. 2015-002120
[Patent Literature 2]
   PCT International Publication No. WO 2020/066262

### [Summary of Invention]

### [Technical Problem]

As described in Patent Literature 1 and Patent Literature 2, a positive electrode active material is manufactured by reacting a Li source with the hydroxide particles of a synthesized transition metal by a coprecipitation reaction. In the coprecipitation reaction, an aqueous solution of nickel sulphate or the like is used as a raw material, and this is generated by dissolving refined nickel, which has been purified to a high purity to avoid an impurity, in an acid. Nickel sulphate requires processing such as the purification of nickel from a nickel ore mined from a mine and acid dissolution and thus has a problem in that the processing cost is high. In addition, because nickel sulphate is a hexahydrate, the mass% of Ni is about 20-25%, which makes the bulk specific density thereof low, and, in order to compensate to this, the volume to be handled in a step for manufacturing a positive electrode material increases. At the same time, the transport cost is also high. Therefore, a large amount of energy is required for transport or manufacture, and a manufacturing step becomes complex and long. As a result, there has also been a problem in that a greenhouse gas (GHG) to be discharged also increases.

Therefore, the present invention enables a decrease in the volume to be handled in transport or in a step for manufacturing a positive electrode material while using refined nickel purified to a high purity to avoid an impurity to reduce the amount of energy used for transport or manufacture and solve the complexity of the manufacturing step. As a result, an objective of the present invention is to provide a method for manufacturing a positive electrode active material for a lithium-ion secondary battery in which the amount of GHG discharged is suppressed.

### [Solution to Problem]

A method for manufacturing a positive electrode active material for a lithium-ion secondary battery of the present invention, the method including: a step for firing mixed powder in which metal nickel powder, a compound containing lithium, and a compound containing a metal element M other than the lithium and Ni are mixed to yield a positive electrode active material for a lithium-ion secondary battery, the positive electrode active material having a layered structure, wherein an amount of Ni in a total amount of metal elements contained in the positive electrode active material for a lithium-ion secondary battery is equal to or greater than 60% in terms of an atomic ratio, and the metal nickel powder is at least partially oxidized or a step for oxidizing the metal nickel powder is included.

In the method for manufacturing a positive electrode active material for a lithium-ion secondary battery of the present invention, after the metal nickel powder and the compound containing lithium are mixed, the oxidation step for oxidizing the metal nickel powder is performed.

Here, the compound containing lithium is preferably lithium carbonate.

Furthermore, after the oxidation step, a milling and mixing step for milling and mixing oxidized powder containing the oxidized metal nickel powder together with the compound containing the metal element M other than lithium and nickel is preferably performed.

At this time, D50 of primary particles after the milling and mixing step is preferably equal to or less than 0.17 µm.

In addition, a specific surface area after the milling and mixing step is preferably equal to or greater than 28 m²/g.

### [Advantageous Effects of Invention]

According to the present invention, a positive electrode active material for a lithium-ion secondary battery is manufactured using metal nickel powder, which makes it possible to reduce the amount of energy used for transport or manufacture and solve the complexity of the manufacturing step. As a result, it is possible to provide a method for manufacturing a positive electrode active material for a lithium-ion secondary battery in which the amount of GHG discharged is suppressed.

### [Brief Description of Drawings]

Fig. 1 is a flowchart showing an example of a method for manufacturing a positive electrode active material for a lithium-ion secondary battery of the present invention.
Fig. 2 is a schematic view showing an example of the manufacture of metal nickel powder by a water atomization method.
Fig. 3 is a flowchart showing another example of the method for manufacturing a positive electrode active material for a lithium-ion secondary battery of the present invention.
Fig. 4 is a flowchart showing still another example of the method for manufacturing a positive electrode active material for a lithium-ion secondary battery of the present invention.
Fig. 5 is a scanning electron microscopic (SEM) image of a positive electrode active material of Example 2.
Fig. 6 is a SEM image of a positive electrode active material of Example 3.
Fig. 7 is a SEM image of a positive electrode active material of Example 4.
Fig. 8 is an X-ray diffraction (XRD) pattern of Example 2.
Fig. 9 is an XRD pattern of Example 3.
Fig. 10 is an XRD pattern of Example 4.

### [Description of Embodiments]

### <Method for manufacturing positive electrode active material for lithium-ion secondary battery>

Hereinafter, a method for manufacturing a positive electrode active material for a lithium-ion secondary battery according to the present embodiment (hereinafter, referred to as the method for manufacturing a positive electrode active material) will be described.

### [Method for manufacturing metal nickel powder]

Before the method for manufacturing a positive electrode active material will be described, a method for manufacturing metal nickel powder will be exemplified. In the present embodiment, it is possible to use metal nickel powder manufactured by, for example, an atomization method or a carbonyl method. The atomization method or the carbonyl method makes it possible to obtain metal nickel powder having a small impurity element amount, which is preferable. For the purpose of avoiding short circuits in batteries, high-purity raw materials are used in battery members. Particularly, iron (Fe) is an impurity element, which is likely to cause short circuits, and thus the content of Fe in the metal nickel powder is preferably equal to or greater than 100 ppm. The content of Fe is more preferably equal to or less than 30 ppm and still more preferably equal to or less than 10 ppm. In addition, as a high-purity nickel source, a Class I-rated high-purity briquette or cathode is suitable. In the present embodiment, high-purity metal nickel powder containing a small amount of an impurity is obtained without dissolving this briquette or cathode in an acid.

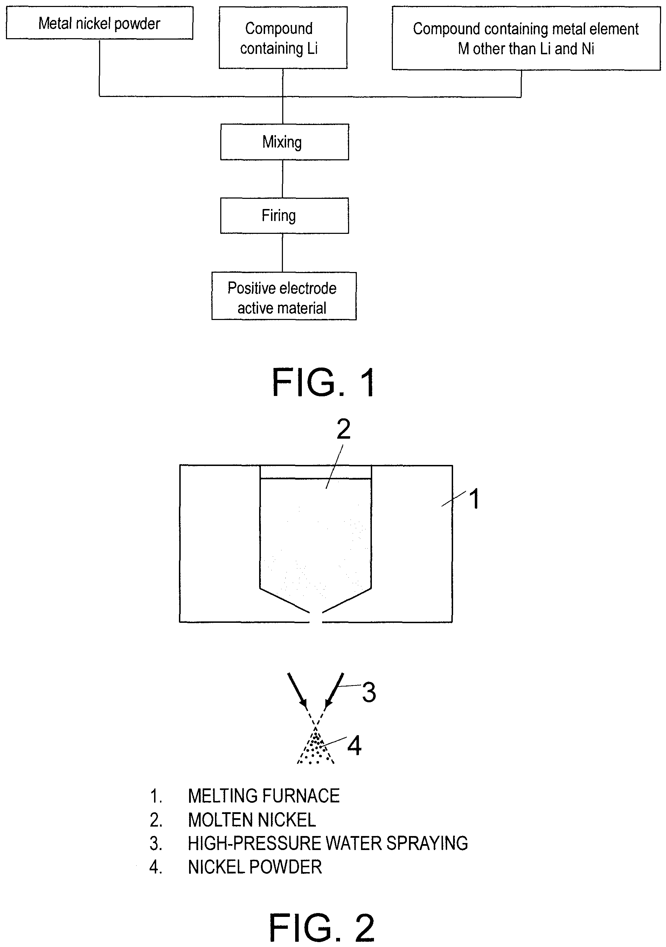

Fig. 2 is a schematic manufacturing view of the metal nickel powder by a water atomization method. The present embodiment is not limited to the water atomization method, which will be shown as an example of the manufacturing method. Here, the method has a first step for dissolving a nickel briquette or cathode with a dissolving furnace 1 to obtain molten nickel 2 and a second step for obtaining metal nickel powder 4 by an atomization method in which high-pressure water 3 is sprayed to the molten nickel 2. As the medium that is sprayed to the molten nickel, it is also possible to use a gas instead of the high-pressure water. In that case, the method is called a gas atomization method. High-purity metal nickel powder can be obtained using these atomization methods.

In the present embodiment, the metal nickel powder is used as a raw material of a positive electrode active material without dissolving the metal nickel powder in an acid. The metal nickel powder has already been partially oxidized at the stage of being just manufactured by the atomization method. In order to promote oxidation, it is possible to use an acidic solution instead of water as the high-pressure water 3 in Fig. 2. In addition, in the case of spraying a gas, a gas containing oxygen may also be sprayed instead of an inert gas such as argon or nitrogen. When the metal nickel powder has been partially oxidized by the atomization method, the oxygen content is preferably, for example, equal to or greater than 300 ppm. In the case of performing an oxidation step separately, mixed powder having a high oxidation rate can be obtained. The oxygen concentration in the metal nickel powder in this case is preferably equal to or greater than 3,000 ppm and more preferably equal to or greater than 5,000 ppm. The oxygen concentration is still more preferably equal to or greater than 10,000 ppm.

In addition, as another method for obtaining the metal nickel powder, there is a carbonyl method. In the carbonyl method, a nickel briquette or the like and a carbon monoxide gas are reacted to obtain gaseous nickel carbonyl and then this nickel carbonyl is thermally decomposed at reduced pressure and a low temperature to obtain the metal nickel powder. High-purity metal nickel powder can be obtained using the carbonyl method.

The particle diameters of the metal nickel powder are preferably within a range of several micrometers to several tens of micrometers. In a case where the milling step is skipped during the manufacturing of a positive electrode active material, the average particle diameter D50 of the metal nickel powder is preferably within a range of 5 to 30 µm, more preferably 5 to 20 µm and still more preferably 5 to 15 µm. The particle diameters of the metal nickel powder can be controlled with the spraying pressure of water or the gas that is sprayed in the atomization method or the like and can be controlled with thermal decomposition conditions in the carbonyl method. Powder exceeding 100 µm can be removed by sieving and returned (recycled) by dissolution or the like.

### [Method for manufacturing positive electrode active material I]

Hereinafter, a method for manufacturing a positive electrode active material I using the metal nickel powder will be described. This manufacturing method I includes a step for firing mixed powder in which the metal nickel powder, a compound containing Li, and a compound containing a metal element M other than Li and Ni are mixed to yield a positive electrode active material having a layered structure as shown in the flowchart of Fig. 1. In the present embodiment, as described above, the metal nickel powder is used as a nickel raw material, and thus an acid dissolution step and a coprecipitation step become unnecessary. Furthermore, since the metal nickel powder is used as the nickel raw material, the volume to be handled in transport or in a step for manufacturing a positive electrode active material can be decreased compared with a compound such as nickel sulphate or nickel hydroxide. When the Ni content rate per unit volume of each compound is specifically indicated by mass%, while nickel sulphate (Ni(SO)₄·6H₂O) is 5% and nickel hydroxide (Ni(OH)₂) is 29%, the Ni content rate of metal nickel is 100%, and the Ni content rate per unit volume becomes high. As a result, in the present embodiment, the volume to be handed in transport or in a step for manufacturing a positive electrode active material is simply about 1/20 compared with nickel sulphate and about 1/3 compared with nickel hydroxide, it is possible to suppress fuel consumption during transport, and the production efficiency can be improved by saving the space during manufacturing or reducing the driving force. These lead to reduction in the amount of GHG discharged, which consequently makes it possible to manufacture a positive electrode active material while suppressing GHG. The Ni content rate per unit volume is preferably close to 100%, and, for example, it is preferable that the metal nickel powder has a specific gravity of equal to or greater than 8 g/cm³, contain metal nickel and others in an oxidized state and does not contain elements or the like other than an inevitable impurity. At this time, the oxygen content of the metal nickel powder becomes equal to or less than 7.3 mass%.

The composition of the positive electrode active material is not particularly limited, and a specific composition of the present embodiment will be described below. Basically, when the amount of Ni in the total amount of the metal elements contained in the positive electrode active material is equal to or greater than 60% in terms of the atomic ratio, since the redox potential of Ni is relatively low, it is easy to develop a high capacity at a predetermined potential, and desired battery characteristics can be met. The amount of Ni is more preferably equal to or greater than 80%, which is preferable since a higher capacity can be expected. In addition, since the proportion of Ni in the total amount of the metal elements is equal to or greater than 60% in terms of the atomic ratio, in a firing process, a firing reaction progresses while lithium and the metal element M diffuse among the particles using each particle of the metal nickel powder as a nucleus, and thus it is considered that it becomes easy to control the powder properties of the positive electrode active material after firing depending on the particle sizes of the metal nickel powder. In addition, the metal nickel powder is used in a state of being at least partially oxidized. This is because, when the metal nickel powder has been at least partially oxidized at a stage before firing, a firing reaction into a layered structure rapidly progresses when the mixed powder is fired in an atmosphere containing oxygen.

Since the positive electrode active material is fired in an atmosphere containing oxygen to obtain a positive electrode active material for a lithium-ion secondary battery having a layered structure, a step for oxidizing the metal nickel powder for the purpose of rapidly performing the firing reaction may be actively introduced. For example, an oxidation step for exposing the metal nickel powder to the atmospheric atmosphere or thermally oxidizing the metal nickel powder in the atmosphere or an oxidizing atmosphere may be separately provided. This will be described using a manufacturing method II. In addition, in a case where the metal nickel powder has been manufactured by the water atomization method, heating and drying become necessary, and this drying step can also be used as an oxidation step. In this case, the upper limit of the oxygen concentration in the metal nickel powder is preferably determined in consideration of the balance with the Ni amount per unit volume in transport.

In Fig. 1, in the step for mixing the metal nickel powder, the compound containing lithium and the compound containing the metal element M other than lithium and nickel to obtain mixed powder, the metal nickel powder can be used as atomized powder. The atomized powder may be used after being milled and adjusted to an appropriate particle size. In addition, as the compound containing lithium, it is possible to use lithium hydroxide or lithium carbonate. When the reactivity with metal is taken into account, lithium hydroxide having a low melting point can be considered, but lithium hydroxide is deleterious, and thus lithium carbonate is preferable in consideration of environment or safety. Next, examples of the compound containing the metal element M other than lithium and nickel include oxides, carbonates, hydroxides, phosphates and the like. For convenience, pure metals are also regarded as "compound." Since the positive electrode active material is a complex oxide of lithium and a metal, a pure metal, an oxide, a carbonate or a hydroxide is preferable as a raw material. The metal element M is preferably, for example, an element containing at least one among Co, Mn, Al, Ti, Mg, Zr, Nb and Mo. In addition, when the reactivity with the metal nickel powder in the firing process is taken into account, the average particle diameter of the compound containing the metal element M is preferably equal to or less than that of the metal nickel powder.

For the mixing of the raw material powders, a V type mixer, a stirring mixer, an attritor, a media mill or the like is used. In order for uniform mixing, it is preferable that aggregation of each raw material powder can be disaggregated. As a mixing method, any of a dry type in which only the raw material powders are mixed and a wet type in which a liquid is used as a dispersion medium in the mixing may be used.

Next, a firing step for firing the mixed powder to obtain a positive electrode active material having a layered structure is performed. For the firing of the mixed powder, an electric furnace or a gas furnace is used. The firing atmosphere preferably contains equal to or greater than 20% of oxygen in terms of the volume ratio, and, in a case where the content of Ni becomes equal to or greater than 80% of the total amount of the metal elements, the oxygen concentration is preferably equal to or greater than 90%.

The firing step preferably includes a calcination stage for holding the mixed powder at equal to or higher than 450°C and equal to or lower than 730°C and a main firing stage for holding the mixed powder at equal to or higher than 750°C and equal to or lower than 900°C. Preferable firing temperature and holding time are adjusted depending on the composition formulated at the time of raw material mixing, and the mixed powder is fired so that a variety of properties (specific surface area and the like) of an intended positive electrode active material are within preferable ranges after firing.

In the present embodiment, up to the step for firing the above-described mixed powder to obtain a positive electrode active material for a lithium-ion secondary battery having a layered structure, the metal nickel powder is at least partially oxidized, and the oxidized metal nickel powder is used. This may be expressed as partially containing an oxide. This means that an acidic solution as described in the step for obtaining the metal nickel powder or a gas containing oxygen may be used, an oxidizing medium may be used in the step for obtaining the mixed powder or the mixed powder may be exposed to an oxidizing atmosphere or the oxidation step may be provided in the firing step. In addition, between each step, a step for exposing the metal nickel powder to at least the atmospheric atmosphere may be added.

### [Method for manufacturing positive electrode active material II]

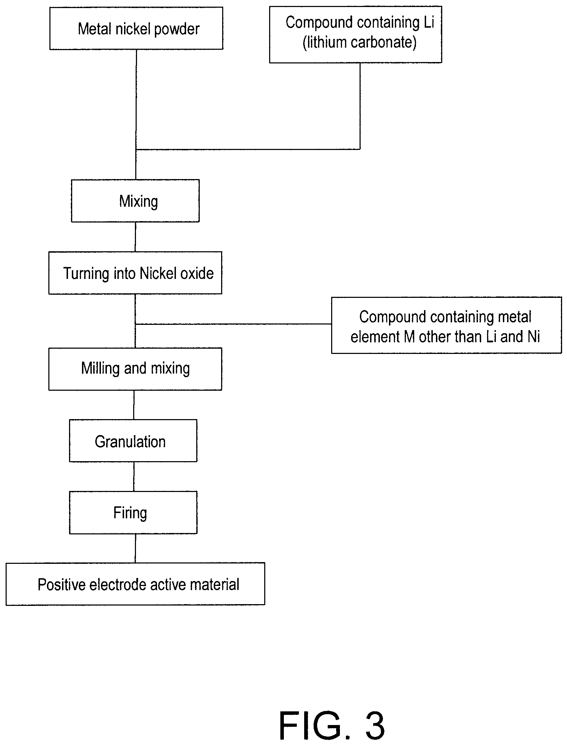

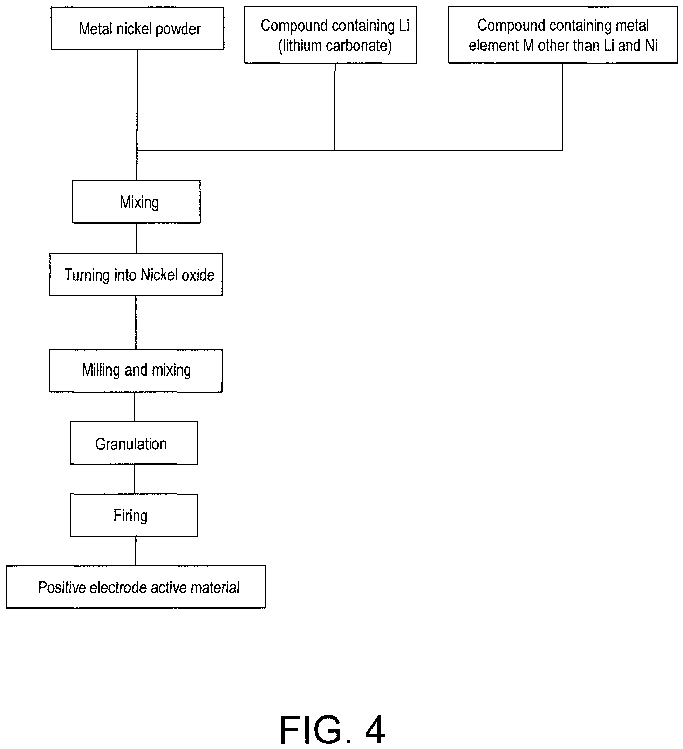

Next, a method for manufacturing a positive electrode active material II using the above-described metal nickel powder will be described. This manufacturing method II is as shown in the flowcharts of Fig. 3 and Fig. 4, and a characteristic is that the metal nickel powder and a compound containing at least lithium are mixed and an oxidation step is performed on this mixed powder. That is, the positive electrode active material is fired in an atmosphere containing oxygen to obtain a positive electrode active material for a lithium-ion secondary battery having a layered structure, but the difference from the manufacturing method I is that an oxidation step for actively oxidizing the metal nickel powder for the purpose of rapidly performing the firing reaction is introduced. In the oxidation step, when the metal nickel powder is thermally oxidized in an oxidizing atmosphere, the time necessary for the oxidation treatment becomes short, which is preferable. Furthermore, in the case of thermal oxidation, the temperature is preferably about 100°C to 700°C, preferably 400°C to 680°C and more preferably 600°C to 680°C. This is because, when the temperature is set to 600°C to 680°C, the oxidation rate becomes high. In addition, the oxidation rate by the oxidation step is preferably equal or greater than 50% and more preferably equal or greater than 65%. When the oxidation rate is high, and only a small amount of the metal nickel component remains after oxidation, milling in a subsequent milling and mixing step becomes easy, and, in the milling and mixing step to be described below, it is possible to obtain milled and mixed powder having a predetermined milled particle size.

In addition, in a case where the metal nickel powder and the compound containing lithium are mixed and then the oxidation step is performed, the compound containing lithium becomes an inclusion, it is possible to prevent the sintering of the metal nickel powder together, and the metal nickel powder can be maintained in a powder state even after the oxidation step, which is preferable. In addition, the amount of the compound containing lithium that is mixed with the metal nickel powder is preferably equal to or greater than 25 mass% of the compound containing lithium that is used for the manufacturing. This is because, when equal to or greater than 25 mass% of the compound containing lithium is mixed and then the metal nickel powder is thermally oxidized, it is possible to prevent the sintering of the metal nickel powder together.

The melting point of the compound containing lithium is preferably a higher temperature than the temperature of the thermal oxidation. When the melting point of the compound containing lithium is a higher temperature than the thermal oxidation temperature, it is possible to prevent the sintering of the metal nickel powder together in the oxidation step. Therefore, the compound containing lithium that is used in this manufacturing method is preferably lithium carbonate. This is because the melting point of lithium carbonate is 724°C, the temperature of the thermal oxidation can be increased to a high temperature of up to 720°C, it is possible to prevent the sintering of the powder together, and the oxidation step can be performed within a short period of time. The average particle diameter of the compound containing Li is preferably several micrometers to several hundreds of micrometers and more preferably several micrometers to several tens of micrometers.

The particle diameters of the metal nickel powder are preferably within a range of several micrometers to several tens of micrometers as described in the manufacturing of the metal nickel powder. However, in this manufacturing method II, the average particle diameter of the metal nickel powder is preferably within a range of 5 to 30 µm, more preferably 5 to 20 µm and still more preferably 5 to 15 µm since the metal nickel powder and the compound containing lithium can be uniformly mixed in the mixing step and the oxidation rate can be increased in the oxidation step.

Next, the compound containing the metal element M other than lithium and nickel is mixed. In the case of introducing the oxidation step, as shown in Fig. 3, after the oxidation step, the oxidized powder containing the oxidized metal nickel powder and the compound containing the metal element M other than lithium and nickel are mixed to obtain mixed powder. The oxidation step may be an oxidation step that is performed on mixed powder obtained by further mixing the compound containing the metal element M other than lithium and nickel with a mixture of the metal nickel powder and the compound containing lithium as shown in Fig. 4. Here, since it is possible to decrease the treatment amount in the oxidation step, the mixing step is preferably to mix the compound containing the metal element M other than lithium and nickel after the oxidation step shown in Fig. 3.

The compound containing the metal element M other than Li and Ni is the same as that in the manufacturing method I and thus has not been described, but the composition of the positive electrode active material will be exemplified below.

Next, a step for milling and mixing the mixed powder containing the oxidized powder (also may be referred to as the mixing and milling step) is introduced for the purpose of promoting the firing reaction. This step corresponds to the step for obtaining mixed powder in the manufacturing method I.

Milling and mixing can be performed using an attritor, a media mill or the like. Since the mixed powder can be milled to a submicron size, a media mill is preferably used, and a bead mill is more preferably used.

D50 of the primary particles of the mixed powder after the milling and mixing (milled and mixed powder) is preferably equal to or less than 0.17 µm. When D50 of the primary particles is equal to or less than 0.17 µm, the firing reaction is promoted, and voids in the positive electrode active material are suppressed. As a result, the particle strength of the positive electrode active material becomes a high strength, and the cycle characteristics become favorable. In addition, D95 of the primary particles of the milled and mixed powder is preferably equal to or less than 0.26 µm. When D95 of the primary particles is equal to or less than 0.26 µm, the firing reaction is promoted, and voids in the positive electrode active material are suppressed. As a result, the particle strength of the positive electrode active material becomes a high strength, and the cycle characteristics become favorable.

In addition, the specific surface area of the milled and mixed powder is preferably equal to or greater than 28 m²/g. When the specific surface area of the milled and mixed powder is equal to or greater than 28 m²/g, the firing reaction is promoted, and voids in the positive electrode active material are suppressed. As a result, the particle strength of the positive electrode active material becomes a high strength, and the cycle characteristics become favorable.

Next, a firing step for firing the mixed powder or the milled and mixed powder to obtain a positive electrode active material for a lithium-ion secondary battery having a layered structure will be described.

For the firing of the mixed powder or the milled and mixed powder, an electric furnace or a gas furnace is used. The firing atmosphere preferably contains equal to or greater than 20% of oxygen in terms of the volume ratio, and, in a case where the content of Ni becomes equal to or greater than 80% of the total amount of the metal elements, the oxygen concentration is preferably equal to or greater than 90%.

The firing step includes a calcination stage for holding the mixed powder at equal to or higher than 450°C and equal to or lower than 730°C and a main firing stage for holding the mixed powder at equal to or higher than 750°C and equal to or lower than 900°C. Preferable firing temperature and holding time are adjusted depending on the composition formulated at the time of raw material mixing, and the mixed powder is fired so that a variety of properties (specific surface area and the like) of an intended positive electrode active material are within preferable ranges after firing.

A synthesized lithium transition metal complex oxide may be subjected to a cleansing step in which cleansing is performed with deionized water or the like, a drying step in which the cleansed lithium transition metal complex oxide is dried, or the like after the firing step for the purpose of the removal of an impurity or the like. In addition, the synthesized lithium transition metal complex oxide may be subjected to a disaggregating step in which the synthesized lithium transition metal complex oxide is disaggregated, a classification step in which the lithium transition metal complex oxide is classified to a predetermined particle size, or the like.

Next, the composition of the positive electrode active material of the present embodiment will be described. The composition of the positive electrode active material of the present embodiment is not particularly limited as described above, but a preferable composition will be described below.

First, the positive electrode active material according to the present embodiment is represented by the following formula (1).

Li₁₊ₐNiMO_{2+α} ··· (1)

(Here, in the formula (1), M is a metal element other than Li and Ni, the proportion of the Ni in the total amount of the metal elements is equal to or greater than 60 atom% and a and α are numbers satisfying -0.1≤a≤0.2 and -0.2≤α≤0.2.)

The positive electrode active material according to the present embodiment has a composition in which the proportion of Ni in the total amount of the metal elements other than Li is equal to or greater than 60 atom% and is thereby capable of realizing a high energy density or a high charge and discharge capacity. As the proportion of Ni in the total amount of the metal elements other than lithium Li, it is possible to have an appropriate value in a range of equal to or greater than 60 atom% and equal to or less than 100 atom%. Since the positive electrode active material contains nickel in a high proportion as described above, it is important for an oxidation reaction where Ni²⁺ is oxidized into Ni³⁺ to be efficiently performed.

A more preferable specific composition of the positive electrode active material according to the present embodiment is represented by the formula (2).

Li₁₊ₐNi_{b}Co_{c}M1_{d}XₑO_{2+α} ··· (2)

[Here, in the formula (2), M1 represents at least one selected from Al and Mn, X represents at least one metal element other than Li, Ni, Co, Al and Mn, and a, b, c, d, e and α are numbers satisfying -0.1≤a≤0.2, 0.7≤b≤1.0, 0≤c≤0.20, 0≤d≤0.20, 0≤e≤0.1, b+c+d+e=1 and-0.2<a<0.2.]

The positive electrode active material represented by the formula (2) has a high Ni content rate and is thus capable of exhibiting a high charge and discharge capacity in a range of up to near 4.3 V compared with LiCoO₂ and the like. In addition, since the Ni content rate is high, for the positive electrode active material, the raw material cost is inexpensive, and the raw material is easy to procure compared with LiCoO₂ and the like.

Here, the meanings of the numerical ranges of a, b, c, d, e and α in the formulae (1) and (2) will be described.

a in the formula is set to equal to or greater than -0.1 and equal to or less than 0.2. a represents an excess or deficiency of lithium from the stoichiometric ratio of the lithium complex compound represented by a general formula: LiM'O₂, that is, Li:M' :O = 1:1:2. When the amount of lithium is excessively small, the charge and discharge capacity of the positive electrode active material becomes low. On the other hand, when the amount of lithium is excessively large, the charge and discharge cycle characteristics deteriorate. When a is within the above-described numerical range, it is possible to satisfy both a high charge and discharge capacity and favorable charge and discharge cycle characteristics.

a may be set to equal to or greater than -0.02 and equal to or less than 0.07. When a is equal to or greater than -0.02, since the amount of lithium secured is large enough to contribute to charging and discharging, it is possible to increase the charge and discharge capacity of the positive electrode active material. In addition, when a is equal to or less than 0.07, since charge compensation is sufficiently made by a valence change in the transition metal, it is possible to satisfy both a high charge and discharge capacity and favorable charge and discharge cycle characteristics.

The coefficient b of nickel is set to equal to or greater than 0.7 and equal to or less than 1.0. When b is equal to or greater than 0.7, a sufficiently high charge and discharge capacity can be obtained compared with a case where other transition metals are used. Therefore, when b is within the above-described numerical range, it is possible to manufacture a positive electrode active material exhibiting a high charge and discharge capacity at a low cost compared with LiCoO₂ and the like.

b is preferably set to equal to or greater than 0.8 and equal to or less than 0.95 and more preferably set to equal to or greater than 0.85 and equal to or less than 0.95. When b is equal to or greater than 0.8, as b becomes larger, a higher charge and discharge capacity can be obtained. In addition, when b is equal to or less than 0.95, as b becomes smaller, lattice distortion or a change in the crystal structure in association with the intercalation or deintercalation of lithium ions is reduced, and, during firing, cation mixing, which is the entry of nickel into lithium sites, or the deterioration of the crystallinity is less likely to be caused, and thus the deterioration of the charge and discharge capacity or the charge and discharge cycle characteristics is suppressed.

The coefficient c of cobalt is set to equal to or greater than 0 and equal to or less than 0.20. When cobalt has been added, the crystal structure is stabilized, and an effect of suppressing cation mixing, which is the entry of nickel into lithium sites, or the like can be obtained. Therefore, it is possible to improve the charge and discharge cycle characteristics without significantly impairing the charge and discharge capacity. On the other hand, when there is an excess of cobalt, since the raw material cost becomes high, the manufacturing cost of the positive electrode active material increases. When c is within the above-described numerical range, it is possible to satisfy both a high charge and discharge capacity and favorable charge and discharge cycle characteristics with favorable productivity.

c may be set to equal to or greater than 0.01 and equal to or less than 0.20 and may be set to equal to or greater than 0.03 and equal to or less than 0.20. When c is equal to or greater than 0.01, as c becomes larger, an effect of element substitution of cobalt can be more sufficiently obtained, and the charge and discharge cycle characteristics further improve. In addition, when c is equal to or less than 0.20, the raw material cost becomes more inexpensive, and the productivity of the positive electrode active material becomes more favorable.

The coefficient d of M1 is set to equal to or greater than 0 and equal to or less than 0.20. When at least one element (M1) selected from the group consisting of manganese and aluminum is element-substituted, even in a case where lithium is deintercalated by charging, the lamellar structure is more stably preserved. On the other hand, when there is an excess of this element (M1), the proportion of other transition metals such as nickel becomes low, and the charge and discharge capacity of the positive electrode active material decreases. When d is within the above-described range, the crystal structure of the positive electrode active material is stably preserved, and it is possible to obtain favorable charge and discharge cycle characteristics, thermal stability or the like together with a high charge and discharge capacity.

As the element represented by M1, manganese is particularly preferable. When manganese is element-substituted, a higher charge and discharge capacity can be obtained compared with a case where aluminum is element-substituted. In addition, during the firing of the lithium complex compound, manganese also reacts with lithium carbonate as shown in the following formula (3). Such a reaction suppresses the coarsening of crystal grains, and, since it is possible to make the oxidation reaction of nickel progress at a high temperature, a positive electrode active material exhibiting a high charge and discharge capacity can be efficiently obtained.

Li₂CO₃+2M'O+0.5O₂ → 2LiM'O₂ + CO₂ ··· (3)

(Here, in the formula (3), M' represents a metal element such as Ni, Co or Mn.)

The coefficient d of M1 is preferably equal to or greater than 0.02 and more preferably equal to or greater than 0.04. As the coefficient d of M1 becomes larger, an effect of element substitution of at least one element selected from the group consisting of manganese and aluminum can be more sufficiently obtained. In a case where M1 is manganese, it becomes possible to make the oxidation reaction of nickel progress at a higher temperature, and a positive electrode active material exhibiting a high charge and discharge capacity can be more efficiently obtained. In addition, the coefficient d of M1 is preferably equal to or less than 0.18. When the coefficient d of M1 is equal to or less than 0.18, even in a case where M is element-substituted, a high charge and discharge capacity is preserved.

The coefficient e of X is set to equal to or greater than 0 and equal to or less than 0.10. X represents one or more metal elements other than Li, Ni, Co, Al and Mn; however, when at least one element selected from the group consisting of magnesium, titanium, zirconium, molybdenum and niobium has been element-substituted, it is possible to improve a variety of performances such as charge and discharge cycle characteristics while the activity of the positive electrode active material is maintained. On the other hand, when there is an excess of this element (X), the proportion of other transition metals such as nickel becomes low, and the charge and discharge capacity of the positive electrode active material decreases. When e is within the above-described numerical range, it is possible to satisfy all of a high charge and discharge capacity, favorable charge and discharge cycle characteristics and the like.

α in the formulae (1) and (2) is set to equal to or greater than -0.2 and equal to or less than 0.2. α represents an excess or deficiency of oxygen from the stoichiometric ratio of the lithium complex compound represented by a general formula: LiM'O₂, that is, Li:M':O = 1:1:2. When α is within the above-described numerical range, the number of defects in the crystal structure is small, and a high charge and discharge capacity and favorable charge and discharge cycle characteristics can be obtained.

### Examples

Hereinafter, the present invention will be specifically described by showing examples, but the technical scope of the present invention is not limited thereto. Hereinafter, means for measuring characteristic values and preliminary experiments of an oxidation step will be described, and then the examples will be described.

### (Average particle diameter and specific surface area)

D50 and D95 of the primary particles of milled and mixed powder and the secondary particles of the fired powder of a positive electrode active material were measured with a laser diffraction type particle size distribution measuring instrument. The specific surface area was measured by a BET method in which gas adsorption was used using an automatic specific surface area measuring instrument.

### (Oil absorption amount)

The oil absorption amount of a powder specimen was measured according to JIS K 5101-13-1, and N-methylpyrrolidone (NMP) was used as a solvent. 5.0 g of the powder specimen was weighed and installed in a mountain shape on a flat bat. NMP was sucked up with a poly dropper (capacity: 2 mL), and the mass was measured. Next, the powder specimen was kneaded with a spatula while dropping NMP thereon, and the dropping and the kneading were continued until the powder specimen turned into a clay form as a whole. When NMP became excessive, it was possible to visually recognize that liquid droplets were not absorbed into the powder specimen but remained on the surface, and the amount of NMP dropped until this time was converted to a value per 100 g of the powder specimen and regarded as the oil absorption amount.

### (X-ray diffraction pattern)

An X-ray diffraction (XRD) pattern in the X-ray powder diffraction measurement of the positive electrode active material was measured using an X-ray diffraction device "X'Pert PRO MPD" (manufactured by Malvern Panalytical Ltd.) under conditions of a radiation source of CuKα, a tube voltage of 45 kV, a tube current of 40 mA, a sampling interval of 0.02°/step, a divergence slit of 0.5°, a scattering slit of 0.5°, a light-receiving slit of 0.15 mm and a scanning range 15°≤2θ≤80°.

### [Oxidation step for metal nickel powder]

### (Preliminary experiment 1)

Metal nickel powder having D50 of 8 µm and manufactured by a water atomization method (manufactured by Nippon Atomized Metal Powders Corporation) and lithium carbonate were weighed so that the mole ratio (Li:Ni) between the metal elements reached 1.03:0.85. A total amount of 5 kg of these raw material powders were input into a V type mixer having a capacity of 45 L and mixed for 90 minutes, thereby obtaining raw material mixed powder.

Next, this raw material mixed powder was thermally treated in a firing furnace in the atmospheric atmosphere at 650°C for 10 hours, thereby obtaining oxidized powder. The weight of the obtained oxidized powder increased from the raw material mixed powder by 18%. From this increase rate of the weight, it was possible to confirm that 70% of the metal nickel powder had turned into nickel oxide. That is, the oxidation rate was 70%. In addition, a part of the oxidized powder had been caked. The caked part was disaggregated with a mortar, thereby obtaining oxidized powder having D50 of 8 µm.

### (Preliminary experiment 2)

The same oxidation step as in the preliminary experiment 1 was performed except that metal nickel powder having D50 of 8 µm and manufactured by a carbonyl method (manufactured by Vale) was used, thereby obtaining oxidized powder having D50 of 8 µm. The oxidation rate of this metal nickel powder was 70%.

### (Preliminary experiment 3)

The same oxidation step as in the preliminary experiment 1 was performed except that metal nickel powder having D50 of 67 µm was used, thereby obtaining oxidized powder having D50 of 32 µm. The oxidation rate of this metal nickel powder was 10%.

From the preliminary experiment 1, the preliminary experiment 2 and the preliminary experiment 3, it was found that, when D50 of the metal nickel powder was small, the oxidation rate became high, and, when D50 was at least equal to or less than 8 µm, oxidized powder having a high oxidation rate of equal to or greater than 70% could be obtained.

### (Preliminary experiment 4)

The same oxidation step as in the preliminary experiment 1 was performed except that metal nickel powder and lithium carbonate were weighed so that the mole ratio (Li:Ni) between the metal elements reached 0.26:0.85. A part of oxidized powder was caked, but disaggregated with a mortar, thereby obtaining oxidized powder having D50 of 8 µm. The fact that the mole ratio (Li:Ni) between the metal elements of the metal nickel powder and lithium carbonate reached 0.26:0.85 means that the metal nickel powder and 25 mass% of the compound containing lithium, which was used for the manufacturing, were mixed.

### (Preliminary experiment 5)

Metal nickel powder and lithium carbonate were weighed so that the mole ratio (Li:Ni) between the metal elements reached 0:0.85. That is, only metal nickel was oxidized. Except that, the same oxidation step as in the preliminary experiment 1 was performed. It was not possible to sinter the metal nickel powder and to disaggregate the metal nickel powder with a mortar.

From the preliminary experiment 1, the preliminary experiment 4 and the preliminary experiment 5, it was possible to confirm that, when the metal nickel powder and equal to or greater than 25 mass% of the compound containing lithium, which was used for the manufacturing, were mixed and then oxidized, it was possible to prevent the sintering of the metal nickel powder.

### [Example 1]

In Example 1, a manufacturing method I was performed. That is, metal nickel powder having an average particle diameter of 8 µm was obtained by a water atomization method in which plate-like metal nickel having a Fe content rate of 30 ppm was melted in a dissolving furnace and high-pressure water was sprayed to the molten nickel caused to flow out and drop. The oxygen amount of this metal nickel powder was measured with an oxygen/nitrogen analyzer and found out to be 3,000 ppm. Raw materials prepared other than the obtained metal nickel powder are as described below. Lithium hydroxide was prepared as a compound containing lithium, and cobalt oxide, manganese oxide and titanium oxide were prepared as compounds containing a metal element M other than lithium and nickel. Each raw material was weighed so that the mole proportions (Li:Ni:M) of the metal elements reached 1.03:0.85:0.15. A total amount of 5 kg of these raw material powders were input into a V type mixer having a capacity of 45 L and mixed for 90 minutes, thereby obtaining raw material mixed powder. Next, this raw material mixed powder was calcined in a firing furnace in which the atmosphere was substituted with an oxygen gas atmosphere under an oxygen stream at 500°C for 10 hours and then mainly fired at 820°C for 10 hours. Between each step, the metal nickel powder was transported in an environment where the metal nickel powder was exposed to the atmosphere without being sealed in a vacuum or a non-oxidizing atmosphere. A positive electrode active material composed of a lithium metal complex oxide was obtained as described above.

In Example 1, the positive electrode active material containing nickel as a main component was manufactured using the metal nickel powder, whereby it was possible to reduce an impurity. In addition, in a conventional coprecipitation process, refined nickel is processed to a water-soluble compound such as nickel sulphate and then processed to an aqueous solution of nickel sulphate or the like (acid dissolution step), furthermore, nickel hydroxide powder is manufactured from this aqueous solution of nickel sulphate or the like (coprecipitation step), and this nickel hydroxide powder is used as a precursor. Regarding this point, in the example, metal nickel powder directly manufactured from refined nickel without performing processing to a compound such as nickel sulphate or nickel hydroxide is used as a precursor. Therefore, the acid dissolution step and the coprecipitation step became unnecessary, and it was possible to easily manufacture the positive electrode active material. In addition, it was possible to decrease the volume to be handled in transport or in a step for manufacturing a positive electrode material.

### [Example 2]

In Example 2, a manufacturing method II was performed. That is, as raw materials, lithium carbonate, metal nickel powder, cobalt carbonate, manganese carbonate, titanium oxide and aluminum oxide were prepared, each raw material was weighed so that the mole proportions (Li:Ni:Co:Mn:Ti:Al) of the metal elements reached 1.03:0.85:0.03:0.09:0.03:0.01. As the metal nickel powder, metal nickel powder having D50 of 8 µm manufactured by the above-described water atomization method was used.

First, the metal nickel powder and lithium carbonate were input into a V type mixer and mixed for 90 minutes, thereby obtaining raw material mixed powder. Next, this raw material mixed powder was oxidized in a firing furnace in the atmospheric atmosphere at 650°C for 10 hours (oxidation step), thereby obtaining oxidized powder containing the oxidized metal nickel powder. The obtained oxidized powder and metal elements M composed of cobalt carbonate, manganese carbonate, titanium oxide and aluminum oxide were mixed, and pure water was added thereto so that the solid content ratio reached 30 mass%. In addition, a mixture was milled in a wet process (wet type mixing) with a mill, thereby preparing a raw material slurry so that D50 of the primary particles reached 0.30 µm (milling and mixing step). Subsequently, the obtained raw material slurry was sprayed and dried with a nozzle type spray dryer (manufactured by Ohkawara Kakohki Co., Ltd., ODL-20 type), thereby obtaining a granulated powder having D50 of about 10 µm (granulation step). In addition, the dried granulated powder was fired, thereby obtaining a lithium transition metal complex oxide (firing step). Specifically, the dried granulated powder was calcined in a firing furnace in which the atmosphere was substituted with an oxygen gas atmosphere under an oxygen stream at 700°C for 24 hours. After that, the dried granulated powder was mainly fired in the firing furnace in which the atmosphere was substituted with an oxygen gas atmosphere under an oxygen stream at 840°C for 10 hours, thereby obtaining a lithium transition metal complex oxide. Fired powder obtained by the firing step was classified using a sieve having a mesh size of 53 µm, and powder below the sieve was used as a positive electrode active material of a specimen.

### [Example 3]

A positive electrode active material was manufactured by the same method as in Example 2 except that the mixture was milled in a wet process (wet type mixing) with a mill, thereby preparing a raw material slurry so that D50 of the primary particles reached 0.17 µm.

### [Example 4]

A positive electrode active material was manufactured by the same method as in Example 2 except that the mixture was milled in a wet process (wet type mixing) with a mill, thereby preparing a raw material slurry so that D50 of the primary particles reached 0.13 µm.

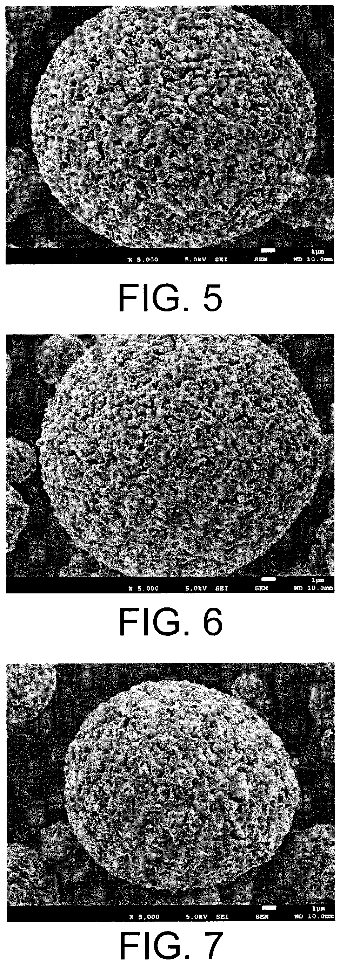

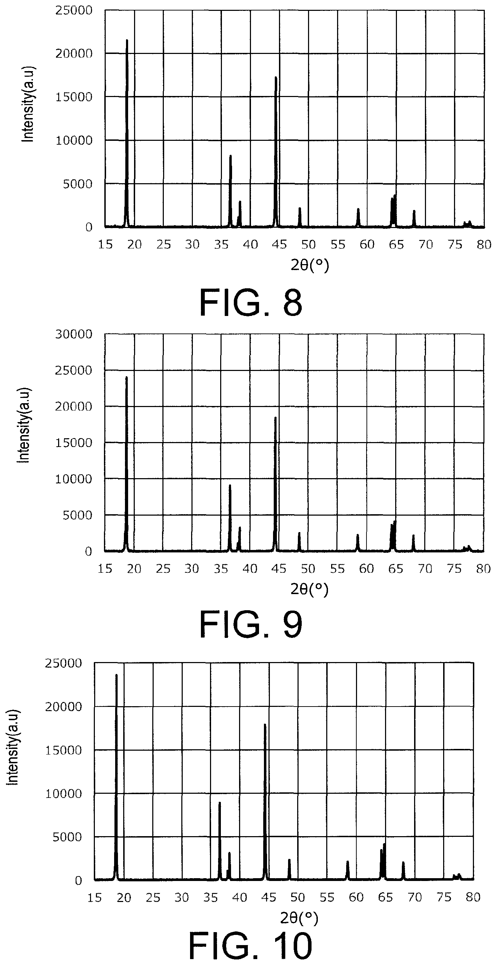

The specific surface areas of the granulated powders of Examples 2 to 4 were measured. These are shown in Table 1. In addition, the positive electrode active materials of Examples 2 to 4 were observed with SEM, and X-ray diffraction was measured. The photographs are shown in Fig. 5 to Fig. 7. In addition, the X-ray diffraction patterns are shown in Fig. 8 to Fig. 10. Furthermore, the specific surface areas and oil absorption amounts of the positive electrode active materials of Examples 2 to 4 were measured. These are jointly shown in Table 1.

### (Production of positive electrode)

Next, lithium-ion secondary batteries in which the synthesized positive electrode active material was used as a material of a positive electrode were produced, and the discharge capacities and capacity retention rates of the lithium-ion secondary batteries were measured. First, the produced positive electrode active material, a carbon-based conductive material, and a binding agent dissolved in advance in N-methyl-2-pyrrolidone (NMP) were mixed so that the mass proportions reached 94:4.5:1.5. In addition, a uniformly mixed positive electrode mixture slurry was applied onto a positive electrode current collector of a 15 µm-thick aluminum foil so that the amount of the slurry applied reached 13 mg/cm². Next, the positive electrode mixture slurry applied to the positive electrode current collector was thermally treated at 120°C, and the solvent was distilled away, thereby forming a positive electrode mixture layer. After that, the positive electrode mixture layer was press-molded by hot press, blanked into a circular shape having a diameter of 15 mm, and used as the positive electrode.

### (Initial capacity and charge and discharge cycle characteristics (capacity retention rate))

Subsequently, a lithium-ion secondary battery was produced using the produced positive electrode, a negative electrode and a separator. As the negative electrode, metal lithium blanked in a circular shape having a diameter of 16 mm was used. As the separator, a 30 µm-thick polypropylene porous separator was used. The positive electrode and the negative electrode were made to face each other across the separator to assemble the lithium-ion secondary battery. As a non-aqueous electrolytic solution, a solution obtained by dissolving LiPF₆ in a solvent in which ethylene carbonate and dimethyl carbonate were mixed so that the volume ratio reached 3:7 to a concentration of 1.0 mol/L was used.

The produced lithium-ion secondary battery was charged in an environment of 25°C with a constant current of 38 A/kg based on the weight of a positive electrode mixture at a constant voltage with an upper limit potential of 4.3 V In addition, the lithium-ion secondary battery was discharged up to a lower limit potential of 2.5 V with a constant current of 40 A/kg based on the weight of the positive electrode mixture, and the charge capacity and the discharge capacity were measured. After that, the lithium-ion secondary battery was charged with a constant current of 190 A/kg based on the weight of the positive electrode mixture at a constant voltage with an upper limit potential of 4.3 V In addition, the lithium-ion secondary battery was discharged up to a lower limit potential of 2.5 V with a constant current of 190 A/kg based on the weight of the positive electrode mixture. The above-described cycle was performed a total of 30 times, and the discharge capacity after the 30^{th} cycle was measured. The ratio of the discharge capacity after the 10^{th} cycle to the initial capacity was calculated as the capacity retention rate. The results are jointly shown in Table 1.

**[Table 1-1]**

| | Prepared composition | Primary particles after milling and mixing | | |
|---|---|---|---|---|
| | | D50 of primary particles (µm) | D95 of primary particles (µm) | Specific surface area (m²/g) |
| Example 2 | Li_{1.03}Ni_{0.85}Co_{0.03}Mn_{0.09}Ti_{0.02}Al_{0.01}O₂ | 0.3 | 0.52 | 18 |
| Example 3 | Li_{1.03}Ni_{0.85}Co_{0.03}Mn_{0.09}Ti_{0.02}Al_{0.01}O₂ | 0.17 | 0.26 | 28 |
| Example 4 | Li_{1.03}Ni_{0.85}Co_{0.03}Mn_{0.09}Ti_{0.02}Al_{0.01}O₂ | 0.13 | 0.24 | 35 |

**[Table 1-2]**

| | Positive electrode active material | | Secondary battery | | |
|---|---|---|---|---|---|
| | Specific surface area (m²/g) | Oil absorption amount (ml/100 g) | Charge capacity (Ah/kg) | Discharge capacity (Ah/kg) | Capacity retention rate (%) |
| Example 2 | 1.1 | 50 | 222 | 195 | 81 |
| Example 3 | 1 | 37 | 222 | 196 | 84 |
| Example 4 | 0.9 | 31 | 222 | 195 | 87 |

It was found from the SEM observation images of Fig. 5 to Fig. 7 that the secondary particle diameters of the positive electrode active materials of Examples 2 to 4 were about 10 µm and the primary particle diameters were about 400 nm. In addition, it was possible to confirmed that, compared with the positive electrode active material of Example 2 where D50 of the primary particles of the mixed powder after milling and mixing (milled and mixed powder) was equal to or less than 0.30 µm, in the positive electrode active materials of Example 3 and Example 4 where D50 of the primary particles of the mixed powder after milling and mixing (milled and mixed particles) was 0.17 µm, the numbers of voids were small, and, when D50 of the primary particles of the mixed powder after milling and mixing (milled and mixed particles) was equal to or less than 0.17 µm, the firing reaction was promoted and voids in the positive electrode active material could be suppressed.

It was possible to confirm from the XRD patterns of Fig. 8 to Fig. 10 that, in all of the positive electrode active materials of Examples 2 to 4, peaks belonging to a 003 plane were shown at 2Θ = near 18°, peaks belonging to a 101 plane were shown at 2Θ = near 36°, peaks belonging to a 006 plane and a 012 plane were shown at 2Θ = near 38°, peaks belonging to a 104 plane were shown at 2Θ = near 44°, peaks belonging to a 015 plane were shown at 2Θ = near 48° and peaks belonging to a 107 plane were shown at 2Θ = near 58°, and thus the positive electrode active materials belonged to a space group R3-m and were lithium metal complex oxides having a layered structure.

Table 1 shows that the positive electrode active materials of Examples 2 to 4 have high capacities; the charge capacities are 222 Ah/kg and the discharge capacities are equal to or greater than 195 Ah/kg. In addition, the capacity retention rates are equal to or greater than 81%, and the cycle characteristics are favorable. That is, it was possible to confirm that a positive electrode active material having a high capacity and favorable cycle characteristics can be obtained by the method for manufacturing a positive electrode active material of the present invention using metal nickel powder as a raw material without performing processing to a compound such as nickel sulphate or nickel hydroxide. In addition, it was possible to confirm that the capacity retention rates of the positive electrode active materials of Example 3 and Example 4 where D50 of the primary particles after milling and mixing was equal to or less than 0.17 µm, D95 was equal to or less than 0.26 µm and the specific surface area was equal to or greater than 28 m²/g were as more favorable as equal to or greater than 84%.

What has been described shows that, even in the present examples, the nickel raw material does not need processing to a compound such as nickel sulphate or nickel hydroxide compared with the conventional coprecipitation process. That is, the acid dissolution step or the coprecipitation step is unnecessary, and positive electrode active materials can be simply manufactured. In addition, since positive electrode active materials can be manufactured using metal nickel powder as it is without being changed to nickel sulphate or nickel hydroxide or by oxidizing metal nickel powder, the manufacturing steps are short, and the number of times of transport between the manufacturing steps is small. Besides, since metal nickel powder has a high nickel content rate and a large specific gravity compared with nickel sulphate, nickel hydroxide and the like, the volume to be transported becomes small, and the amount of energy necessary for transport can be reduced. Based on these facts, the amount of greenhouse gas (GHG) discharged can be reduced by about 30 to 40%, and, as a result, positive electrode active materials can be manufactured while the amount of GHG discharged is suppressed.

### [Reference Signs List]

1 Melting furnace
2 Molten nickel
3 High-pressure water spraying
4 Metal nickel powder

## Claims

1. A method for manufacturing a positive electrode active material for a lithium-ion secondary battery, the method comprising:
a step for firing mixed powder in which metal nickel powder, a compound containing lithium, and a compound containing a metal element M other than lithium and nickel
are mixed to yield a positive electrode active material for a lithium-ion secondary battery, the positive electrode active material having a layered structure,
wherein an amount of Ni in a total amount of metal elements contained in the positive electrode active material for a lithium-ion secondary battery is equal to or greater than 60% in terms of an atomic ratio, and
the metal nickel powder is at least partially oxidized or a step for oxidizing the metal nickel powder is included.

2. The method for manufacturing a positive electrode active material for a lithium-ion secondary battery according to Claim 1,
wherein, after the metal nickel powder and the compound containing lithium are mixed, the oxidation step for oxidizing the metal nickel powder is performed.

3. The method for manufacturing a positive electrode active material for a lithium-ion secondary battery according to Claim 1 or 2,
wherein the compound containing lithium is lithium carbonate.

4. The method for manufacturing a positive electrode active material for a lithium-ion secondary battery according to Claim 2 or 3,
wherein, after the oxidation step, a milling and mixing step for milling and mixing oxidized powder containing the oxidized metal nickel powder together with the compound containing the metal element M other than lithium and nickel is performed.

5. The method for manufacturing a positive electrode active material for a lithium-ion secondary battery according to Claim 4,
wherein D50 of primary particles after the milling and mixing step is equal to or less than 0.17 µm.

6. The method for manufacturing a positive electrode active material for a lithium-ion secondary battery according to Claim 4,
wherein a specific surface area after the milling and mixing step is equal to or greater than 28 m²/g.
